Europäisches Patentamt

European Patent Office

Office européen des brevets

(19)

(11) Publication number: **0 134 856**
**B1**

(12) **EUROPEAN PATENT SPECIFICATION**

(45) Date of publication of patent specification: **09.03.88**

(51) Int. Cl.⁴: **F 16 F 15/03**

(21) Application number: **83305448.9**

(22) Date of filing: **16.09.83**

(54) **Dampening vibration of rotating shafts.**

(43) Date of publication of application:
**27.03.85 Bulletin 85/13**

(45) Publication of the grant of the patent:
**09.03.88 Bulletin 88/10**

(84) Designated Contracting States:
**DE FR GB IT NL**

(56) References cited:
**DE-A-2 504 766**
**FR-A-1 462 872**
**GB-A- 535 871**

**ENGINEERING, vol. 203, no. 5255, 6th January 1967, page 37, Design Council, London, GB.**

(73) Proprietor: **DRESSER INDUSTRIES,INC.**
**The Dresser Building Elm & Akard Streets P.O. Box 718**
**Dallas Texas 75221 (US)**

(72) Inventor: **McNall, Fredlee Morse deceased (US)**

(74) Representative: **Wain, Christopher Paul et al**
**A.A. THORNTON & CO. Northumberland House 303-306 High Holborn**
**London WC1V 7LE (GB)**

Courier Press, Leamington Spa, England.

## Description

This invention relates to apparatus for dampening vibration of rotating shafts.

Most machinery shafts subject to rotation are supported between two or more bearings positioned at spaced locations along the shaft length. When such shafts as would be encountered in, for example, a turbocompressor are subject to high power inputs and operate at rotational velocities on the order of 2000 r.p.m. and above, it is not uncommon to incur amplitudes of lateral vibration exceeding the usual tolerance of about ±0.002 inches (0.025 mm). Typically, the amplitudes of vibration at various axial shaft locations intermediate the bearings can be about 0.01 inches (0.25 mm) and above. The eccentricity which results from those vibrations can produce various undesirable effects, not least of which is a rubbing contact between rotating elements on or near the shaft. An adverse effect on seals required for efficient operation of the machinery, including premature seal failure, is a typical consequence of such vibration.

For overcoming the adverse effects of vibration various measures have been taken including, for example, increasing the shaft diameter, using different materials, reducing the mass, use of special, or an increased number of, bearings, special types and locations of oil seals where feasible, limiting the operating speed the equipment to exclude rotational velocities at which vibration tends to become severe, etc. However, none of these measures has been entirely satisfactory. Another approach frequently utilized almost as a last resort has been a limiting of shaft length, requiring changes to the equipment that would otherwise be unnecessary. However, this frequently results in excessive manufacturing costs which either have to be absorbed or passed on to the customer.

It has also been proposed to make use of magnetic forces to damp vibrations. FR—A—1462872 discloses an arrangement for damping vibrations of an elongate boring tool in which a copper disc is fixed relative to the tool and is located in a magnetic field produced by permanent magents which are also attached to the tool. The magnets are attached to the tool by resilient means such that if the tool vibrates the magnets will vibrate in a different manner to the tool, thereby forming eddy currents in the copper disc to damp the vibrations. GB—A—1471843 discloses a magnetic bearing in which the shaft is provided with a rotor of ferro-magnetic material which has ring-like portions which form part of the magnetic flux circuit of an electromagnet. If the shaft vibrates the movement of the ring like portions produces a magnetic restoring force and causes eddy currents to be generated in adjacent copper rings to damp the natural spring constant of the magnetic restoring force.

According to the present invention there is provided apparatus comprising: a shaft mounted for rotation; an electrically conductive member; and magnetic means for creating a magnetic field which interacts with the conductive member to damp vibrations of the shaft characterised in that the shaft is mounted for rotation by means of spaced apart bearings; the magnetic means is separate from the bearings and is constituted by at least one magnet located at an axial location between the bearings which produces a magnetic field which extends generally parallel to and co-axially with the shaft; and the electrically conductive member is an electrically conductive annular band positioned radially adjacent to the magnetic field created by the at least one magnet, one of the annular band and the at least one magnet being rotationally fast with the shaft and the other of the annular band and the at least one magnet being supported in a fixed manner radially outward of the said one of the annular band and the at least one magnet at a location such that in the absence of shaft vibrations the annular band does not substantially penetrate the magnetic field, but, in the event of vibrations of excessive amplitude incurred by the shaft in the course of shaft rotation, the annular band will penetrate the magnetic field to induce an electric current in the annular band effective to damp such vibrations.

In order that the invention may be more fully understood, two embodiments thereof will now be described, by way of example, with reference to the accompanying drawings, wherein

Figure 1 is a diagrammatic illustration of a dampening apparatus of the invention on a rotating shaft;

Figure 2 is an enlarged fragmentary view of the encircled portion 2 of Figure 1 for a non-vibratory condition of the rotating shaft;

Figure 3 is an enlarged fragmentary view similar to Figure 2 for a vibratory condition of the rotating shaft; and

Figure 4 is an enlarged fragmentary view, similar to Figure 2, of an alternative embodiment.

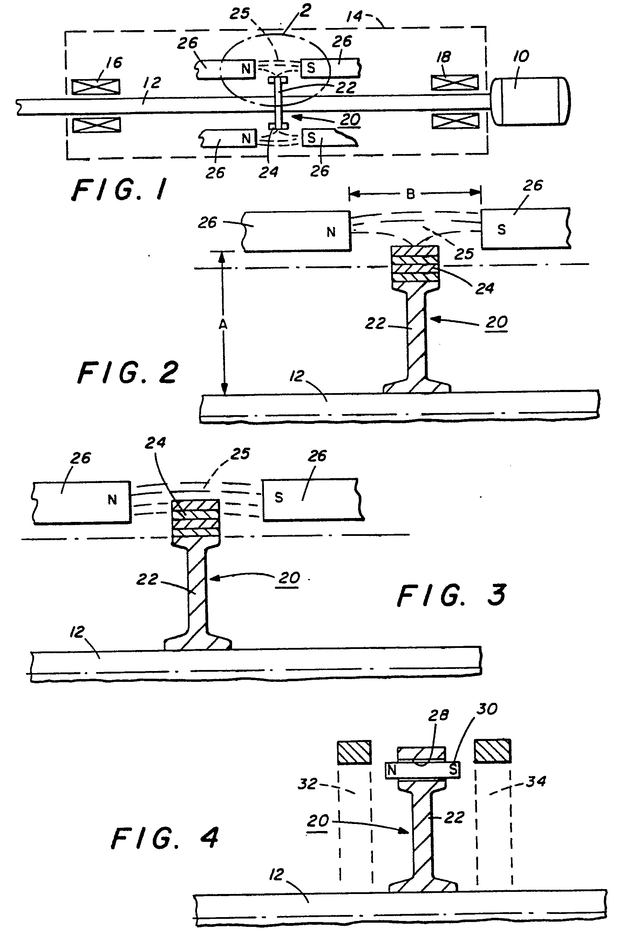

Referring now to the drawings, there is illustrated in Figure 1 a motor 10 driving a shaft 12 within machinery 14 shown in phantom and which typically could comprise a turbocompressor or the like. Supporting shaft 12 for rotation, at opposite ends thereof, are bearings 16 and 18. Ordinarily, in the absence of the invention, the shaft intermediate the bearings would be free to incur whatever offsets or the like might be imposed by the forces being encountered.

In accordance with the invention, a ring 20 is secured to shaft 12 for rotation therewith shown (for purposes of illustration) at an intermediate location approximately central between the bearings 16 and 18. Ring 20 includes a body 22 secured to the shaft as by keying, welding, etc. and at least centrally comprised of a composition having relatively high tensible strength and high electrical resistance. Typically suitable for that purpose would be K-monel age hardened. Banded about the annular periphery of body 22 are one or more layers 24 of an electrically conductive material such as gold, silver or copper.

Cooperating with ring 20 is a transverse magnetic field 25 extending circumferentially about the ring periphery and provided by a plurality of elongated spaced apart permanent magnets 26. The magnets are arranged around shaft 12 at a radial distance A at which the inward edge of field 25 generally coincides with the diameter of ring 20. The north and south poles of magnets 26 are symmetrically spaced apart with respect to ring 22 a distance B as will be explained hereafter. In that arrangement, vibration excursions of shaft 12 at the location of ring 20 will cause the conductive layers or bands 24 of ring 20 to penetrate magnetic field 25 in the manner illustrated in Figure 3.

Radial ring penetration of magnetic field 25 induces a circumferential electrical current in ring bands 24 proportional to the radial velocity of shaft vibration and the change in magnetic field which the bands encounter. By virtue of bands 24 constituting a continuous circumferential conductor, the circumferential current generated thereby leads to energy dissipation from the bands as thermal energy to the pumped gas. Dissipation is in an amount generally proportional to the current squared times the electrical resistance of bands 24. Any force imposed radially on the shaft is opposed by the shaft inertia, shaft springiness and damping. Since heat dissipation from ring 20 is due to vibration of the ring in magnetic field 25, a damping force results from dissipation of the radial force times the vibration velocity.

Because of a tangential force component of field 25 encountered whenever bands 24 initially penetrate the magnetic field, the field is disposed at a distance A determined to be penetrated by outermost band 24 only when vibrational displacement of the shaft occurs thereat. In this manner, excessive drag on shaft rotation that could result from such tangential force is avoided thereby enabling most of the field force to be effective for restoring shaft concentricity rather than imposing undesirable rotational drag.

At the same time, the radius of ring 20 and consequent drag should preferably be minimized since the force of resistance is directly proportional to rotational velocity. Similarly, spacing B between opposed magnets 26 should be held to a minimum within practical limits in order to maintain the magnetic field gradient at the periphery of ring 20 to as great a value as possible. Moreover, magnetic field shaping as is known in the art can be used to enhance the dampening effect imposed by this arrangement.

In mathematical terms, a length of conductor l moving at a velocity v in a magnetic field at right angles to the field of strength B has induced in it a voltage E such that:

$$E = vBl$$

The force F encountered by the conductor is proportional to the induced current I:

$$F = IBl$$

The relation in a conductor that the current is equal to the voltage divided by the resistance

$$I = E/R$$

$$F = IBl = \frac{E}{R}Bl = \frac{v}{R}B^2l^2$$

The energy dissipated W in a closed conductor is the product of the voltage and current

$$W = EI = E^2/R = \frac{v^2B^2l^2}{R}$$

Assuming a ring 20 of 6 inches (15.2 cm) diameter, vibrating at 2000 cycles/min. with a cross sectional area of 1 square inch (6.45 squ.cm) in a filed of 1 weber/m$^2$ (10,000 gauss) with an amplitude of ±0.01 inches (0.25 mm).

F=608. Newtons (i.e. 137. pounds force)
and
W=20.5 watts.

Assuming that the vibrating shaft 12 is 2 inches (5.08 cm) in diameter, 24 inches (61 cm) between bearings and of steel having a vibratory magnification factor of 100, the static deflection y under the dynamic force P would be 0.01″/100=-1×10$^{-4}$ inches (.0025 mm).

From the deflection formula for a round shaft supported on both ends with a center load

$$y = \frac{-1}{48} \frac{Pl^3}{EI}$$

where:

$$I = \frac{\pi d^4}{64}$$

and
P=7.91 pounds (35.2 N), at resonance.

The mechanical power of this vibration would be πPy/cycle, or for 2000 cycles/min.=0.935 watts.

With a force P of 7.91 pounds (35.2 N), the magnification factor could be as low as 5.7 or the vibratory force could be about 17 times the force needed to cause the .01 inches (0.25 mm) deflection assumed at a dynamic magnification factor of 100. For the calculated example, radial vibration would be reduced from the assumed ±0.010 inchdes (0.254 mm) to about ±0.0012 inches (0.030 mm).

For the alternative embodiment of Figure 4, ring 20 includes a plurality of uniformly spaced concentric apertures 28 near its periphery. Within each aperture is secured a permanent magnet 30 adapted to cooperate with stationary copper rings 32 and 34 encircling shaft 12. As in the previous embodiment, vibrational amplitude incurred by shaft 12 will cause an energy dissipating current to be generated for restoring concentricity.

In operation, any vibrational amplitude incurred by ring 20 in excess of the field will cause conductive bands 24 to penetrate into the magnetic field 25 of magnets 26. On bands 24 being immersed in the field, an energy dissipating current is instantly generated causing shaft concentricity to be immediately restored. Operation is simple and yet is highly efficient compared to previous approaches employed for that purpose. While for purposes of description only one ring 20 has been shown centrally located on shaft 12, a plurality of such rings could be employed at any additional locations thereon at which vibration excursion can be anticipated. Moreover, the arrangement of the conductive bands 24 and magnetic members could optionally be reversed in the manner of Figure 4.

Since many changes could be made in the above construction and many apparently widely different embodiments of this invention could be made without departing from the scope thereof, it is intended that all matter contained in the drawings and specification shall be interpreted as illustrative and not in a limiting sense.

## Claims

1. Apparatus comprising: a shaft mounted for rotation; an electrically conductive member; and magnetic means for creating a magnetic field which interacts with the conductive member to damp vibrations of the shaft characterised in that the shaft (12) is mounted for rotation by means of spaced apart bearings (16, 18); the magnetic means (26) is separate from the bearings and is constituted by at least one magnet (26) located at an axial location between the bearings (16, 18) which produces a magnetic field (25) which extends generally parallel to and co-axially with the shaft (12); and the electrically conductive member is an electrically conductive annular band (24) positioned radially adjacent to the magnetic field (25) created by the at least one magnet, one of the annular band (24) and the at least one magnet (26) being rotationally fast with the shaft (12) and the other of the annular band (24) and the at least one magnet (26) being supported in a fixed manner radially outward of the said one of the annular band (24) and the at least one magnet (26) at a location such that in the absence of shaft vibrations the annular band (24) does not substantially penetrate the magnetic field, but, in the event of vibrations of excessive amplitude incurred by the shaft in the course of shaft rotation, the annular band will penetrate the magnetic field to induce an electric current in the annular band effective to damp such vibrations.

2. Apparatus according to claim 1 characterised in that said at least one magnet (26) is arranged to be secured to said shaft (12) for revolving therewith, and said annular band comprises at least a pair of stationary electrically conductive rings (32, 34) radially outward of said at least one magnet and spaced with one of said pair in a plane to each side of said at least one magnet.

3. Apparatus according to claim 1, characterised in that said annular band is secured to said shaft but electrically insulated therefrom, and said at least one magnet is operative to form a magnetic field radially outward of the periphery of said annular band.

**Patentansprüche**

1. Vorrichtung mit einer drehbar gelagerten Welle, einem elektrisch leitfähigen Element und magnetischen Einrichtungen zum Erzeugen eines Magnetfeldes, das mit dem leitfähigen Element zusammenwirkt, um Schwingungen der Welle zu dämpfen, dadurch gekennzeichnet, daß die Welle (12) mittels im Abstand angeordneter Lager (16, 18) drehbar gelagert ist, die magnetische Einrichtung (26) von den Lagern getrennt ist und von wenigstens einem Magneten (26) gebildet wird, der an einer axialen Stelle zwischen den Lagern (16, 18) angeordnet ist und ein Magnetfeld (25) erzeugt, das sich im wesentlichen parallel zu und koaxial mit der Welle (12) erstreckt, und daß das elektrisch leitfähige Element ein elektrisch leitfähiges ringförmiges Band (24) ist, das radial benachbart zu dem Magnetfeld (25) angeordnet ist, das von dem wenigstens einen Magneten erzeugt wird, wobei entweder das ringförmige Band (24) oder der wenigstens eine Magnet (26) drehfest mit der Welle (12) verbunden ist und der wenigstens eine Magnet (26) bzw. das ringförmige Band fest radial außerhalb des wenigstens einen Magneten (26) bzw. des ringförmigen Bandes (24) an einer derartigen Stelle abgestützt ist, daß bei Abwesenheit von Wellenschwingungen das ringförmige Band (24) nicht wesentlich in das Magnetfeld eintritt, jedoch im Falle von Schwingungen übermäßiger Amplitude, die von der Welle bei Wellendrehung ausgeführt werden, das ringförmige Band in das Magnetfeld eintritt, um einen elektrischen Strom in dem ringförmigen Band zu induzieren, der auf solche Schwingungen dämpfend einwirkt.

2. Vorrichtung nach Anspruch 1, dadurch gekennzeichnet, daß der genannte wenigstens eine Magnet (26) an der Welle (12) befestigt ist, um sich mit dieser zu drehen, und daß das ringförmige Band aus wenigstens zwei stationären, elektrisch leitfähigen Ringen (32, 34) besteht, die radial außerhalb des genannten wenigstens einen Magneten angeordnet sind jeweils im Abstand in einer Ebene zu jeder Seite zu dem genannten wenigstens einen Magneten.

3. Vorrichtung nach Anspruch 1, dadurch gekennzeichnet, daß das ringförmige Band an der Welle befestigt, von dieser aber elektrisch isoliert ist, und daß der genannte wenigstens eine Magnet ein Magnetfeld radial außerhalb des Umfangs des genannten ringförmigen Bandes erzeugt.

## Revendications

1. Appareil comprenant un arbre monté afin qu'il tourne, un organe conducteur de l'électricité, et un dispositif magnétique destiné à créer un champ magnétique qui interagit avec l'organe conducteur afin qu'il amortisse les vibrations de l'arbre, caractérisé en ce que l'arbre est porté par des paliers espacés (16, 18) afin qu'il tourne, le dispositif magnétique (26) est séparé des paliers et est constitué par au moins un aimant (26) ayant un emplacement axial compris entre les paliers (16, 18) et qui crée un champ magnétique (25) qui est parallèle de façon générale à l'arbre (12) et coaxial à celui-ci, et l'organe conducteur de l'électricité est une bande annulaire (24) conductrice de l'électricité, disposée radialement à proximité du champ magnétique (25) créé par ledit aimant au moins, la bande annulaire (24) ou l'aimant au moins (26) étant fixé en rotation sur l'arbre (12) et l'aimant au moins (26) ou la bande annulaire (24) respectivement étant supporté de manière fixe radialement à l'extérieur par rapport à la bande annulaire (24) ou à l'aimant au moins (26) respectivement, à un emplacement tel que, en l'absence de vibration de l'arbre, la bande annulaire (24) ne pénètre pas sensiblement dans le champ magnétique, mais que, en cas de vibrations d'amplitude excessive présentées par l'arbre au cours de sa rotation, la bande annulaire pénètre dans le champ magnétique, avec induction d'un courant électrique circulant dans la bande annulaire et assurant efficacement l'amortissement de ces vibrations.

2. Appareil selon la revendication 1, caractérisé en ce que l'aimant au moins (26) est disposé de manière qu'il soit fixé à l'arbre (12) et tourne avec lui, et la bande annulaire comporte au moins deux anneaux fixes et conducteurs de l'électricité (32, 34) disposés radialement à l'extérieur de l'aimant au moins, les anneaux étant distants de manière qu'ils soient placés dans des plans disposés de part et d'autre de l'aimant au moins.

3. Appareil selon la revendication 1, caractérisé en ce que la bande annulaire est fixée à l'arbre mais est isolée électriquement par rapport à lui, et l'aimant au moins est destiné à former un champ magnétique disposé radialement à l'extérieur de la périphérie de la bande annulaire.

FIG. I

FIG. 2

FIG. 3

FIG. 4